# EUROPEAN PATENT APPLICATION

(11) **EP 2 549 314 A1**
(43) Date of publication of application: **23.01.2013**
(21) Application number: 11174677.2
(22) Date of filing: 20.07.2011
(51) Int. Cl.: G02B 6/36, G02B 6/38, G02B 6/42

(54) **Device and method for aligning an optical fiber**

(71) Applicant: Tyco Electronics Raychem BVBA, 3010 Kessel-Lo (BE); Tyco Electronics Corporation, Berwyn, PA 19312 (US)
(72) Inventor: Verheyden, Danny, B-3200 Gelrode (BE); Erdman, David, Hummelstown, PA Pennsylvania 17036 (US); Flaig, Robert, Lancaster, PA Pennsylvania 17603 (US); Plotts, Alan, Harrisburg, 17112 (US); Gurreri, Michael, York, PA Pennsylvania 17404 (US)
(74) Representative: Bird Goën & Co

(57) **Abstract**

A device (1) and a corresponding method are disclosed, wherein the device is for aligning a first optical fiber (9), the first optical fiber (9) having a first bare end (12), the device comprising at least two alignment elements (3,7) defining a channel having a channel end for receiving the first bare end; an elastic element (2) adapted for opening the channel, against a force exerted by the elastic element, by a force exerted by insertion of the first bare end into the channel at the channel end; wherein the at least two alignment elements are adapted for contacting a portion of the first bare end over three line contacts (30), when the first bare end is inserted in the channel.

## Description

### FIELD OF THE INVENTION

The present invention relates to a device and a method for aligning an optical fiber to an optical device. The optical device may be a second optical fiber.

### BACKGROUND OF THE INVENTION

Modern optical devices and optical communications systems widely use fiber optic cables. Optical fibers are strands of glass fiber processed so that light beams transmitted through the glass fiber are subject to total internal reflection wherein a large fraction of the incident intensity of light directed into the fiber is received at the other end of the fiber.

Many approaches to achieve fiber alignment can be found in the prior art, among them are V-grooves and resilient ferrules. A further consideration in connector design is the relative ease of field installation of the connector. It is desirable that a connector can be installed within a relatively short period of time without requiring special skills or manipulations that are not easily carried out in the field. Further, it is desirable that the optical fiber connector manufacturing costs are held as low as possible.

Prior art connectors which have many of the above-listed desirable features include ferrule connectors which use two cylindrical plugs (referred to as ferrules), an alignment sleeve, and axial springs to perform fiber alignment. Precision holes are drilled or molded through the center of each ferrule in order to allow the fiber to insert the alignment sleeve. Precise fiber alignment depends on the accuracy of the central hole of each ferrule. When the fiber ends are inserted, an adhesive bonds the fiber inside the ferrule. Fiber alignment occurs when the ferrules are inserted into the alignment sleeve. Normally, the ferrules connectors use ceramic or metal ferrules wherein the center hole is drilled. But, disadvantageously, drilling of such a central hole that is accurate enough for aligning can be difficult. In addition, a connector containing a ferrule has very high manufacturing costs. Therefore looking for adequate alignment solutions containing ferrule-less connectors would be more desirable.

Straight and constant-width V-grooves are commonly used in prior-art ferrule-less fiber optical devices. An example is the V-groove method described in US 6,516,131 used for alignment of optical fiber ends. The V-groove is unidirectionally or bi-directionally tapered for enabling easy positioning of the fibers. The fiber enters a tapered V-groove and a face-to-face pair of the V-groove is positioned on top of the first V-groove in order to form a channel, which is a funnel that necks down to the size of the optical fiber. With this alignment method, there is however a risk of damaging the brittle optical fiber.

Another example of an alignment system is the bare fiber adapter SUHNER FIBEROPTIC OPTOCLIP II manufactured by Huber+Suhner AG, where the alignment system comprises two rods and two spheres. Two bare optical fibers are aligned; each fiber is aligned by the two rods, that are parallel to the axis of the two optical fibers, and by one sphere per optical fiber. The two rods and the sphere form a V-groove. Each sphere is urged towards the two rods by elastic means.

A need still exists for an improved alignment system for aligning an optical fiber.

### SUMMARY OF THE INVENTION

It is an object of the present invention to provide a device and a method for aligning an optical fiber. The optical fiber may be aligned to an optical device.

This object is met by the method and means according to the independent claims of the present invention. The dependent claims relate to preferred embodiments.

The term "fiber" as used herein relates to a single, optical transmission element having a core usually having a diameter of 8 µm for single-mode and of 50 to 62,5 µm for multi-mode fibers, and a cladding usually having a diameter of 125 µm, wherein the core is the central, light-transmitting region of the fiber, and the cladding is the material surrounding the core to form a guiding structure for light propagation within the core.

The core and cladding can be coated with a primary coating usually comprising one or more organic or polymer layers surrounding the cladding to provide mechanical and environmental protection to the light-transmitting region. The primary coating may have a diameter ranging e.g. between 200 and 300 µm. The core, cladding and primary coating usually are coated with a secondary coating, a so-called "buffer", a protective polymer layer without optical properties applied over the primary coating. The buffer or secondary coating usually has a diameter ranging between 300-1100 µm, depending on the cable manufacturer.

If the coating layer or layers are removed at the end of the fiber over a certain length, so that only the core and cladding remain bare, the end of the fiber is "bare" as this is called in this document.

The term "light" as used herein relates to electromagnetic radiation, which comprises a part of the electromagnetic spectrum that is classified by wavelength into infrared, the visible region, and ultraviolet.

The term "pressured" relates to an applied pressure. When a pressure is applied to a material of a certain volume it is not necessary so that the volume of the material will decrease. Any volume change after pressure applied depends on the properties of the material of a certain volume (for instance the Poisson-ratio).

The term "flat element" relates to an element comprising at least a flat two-dimensional surface. Another example of a flat element is a flat element comprising a flat two-dimensional surface and a deflecting portion. A rectangular beam or a U-groove alignment structure with straight legs as known in the art (for instance as disclosed by Rosa et al in IEEE journal of selected topics in quantum electronics, 5(5), p.1249 (1999)) can also be considered as a flat element.

The term "automatically" relates to functioning without any manual intervention or manual action; once the operation is started, it continues until the operation is terminated.

The term "floating" relates to moving freely and not fixed in one position, place or level. A floating element is an element which is connected or constructed so as to operate and adjust smoothly.

An embodiment in accordance with the invention includes a device for aligning a first optical fiber, the first optical fiber having a first bare end, said device comprising at least two alignment elements defining a channel having a channel end for receiving the first bare end; an elastic element adapted for opening said channel, against a force exerted by said elastic element, by a force exerted by insertion of the first bare end into said channel at said channel end; wherein said at least two alignment elements are adapted for contacting a portion of the first bare end over three line contacts, when the first bare end is inserted in said channel.

The device may be for aligning said first bare end with an optical device. The optical device may be a light source such as a LED, a laser, a laser diode; the optical device may be a light detector, such as a sensor; the optical device may be a second optical fiber that is pre-installed in said device.

The first optical fiber may be part of a first optical connector and the optical device may be a second optical connector including a second optical fiber having a second bare end; wherein said channel further has a second channel end opposite to said channel end and for receiving the second bare end of the second optical fiber; wherein said device further comprises a second elastic element adapted for opening said channel at said second channel end, against a force exerted by said second elastic element, by a force exerted by insertion of the second bare end into said channel at said second channel end; and wherein a set of alignment elements out of said at least two alignment elements are adapted for contacting a portion of the second bare end over a set of three line contacts, when said second bare end is inserted in said channel at said second channel end.

One embodiment in accordance with the invention includes a method for aligning a first bare end of a first optical fiber, the method comprising inserting the first bare end into a first channel end of a channel defined by at least two alignment elements; lifting a first floating alignment element out of said at least two alignment elements by said inserting the first bare end, against an elastic force; contacting a portion of the first bare end over three line contacts with said at least two alignment elements.

The invention relates to a device and method of aligning an optical fiber. The optical fiber may be aligned to an optical device, from the central office up to the end user at home. It can thus be part of an adapter, a pre-installed adapter e.g. a factory installed adapter, an optical fiber combined with a lens, a transducer e.g. the transducer described in WO 2011/031142 or a conversion element to convert different connector types with each other. The optical device to which the optical fiber is aligned can be another optical fiber connector, so that two optical fibers, each in an optical connector, are aligned. In case a single optical fiber in an optical connector is to be aligned with another optical device, the alignment system in accordance with the invention is first aligned to the optical device, by means as known in the art, and that may depend on the nature of the optical device (e.g. a light source, a sensor, etc.) The optical fiber is then aligned in an alignment system in accordance with the invention as discussed below.

An embodiment of a device for aligning an optical fiber comprises a channel which is defined by a V-groove element and a flat element. The V-groove element may be tapered at the first side of the V-groove element and at the second opposite side of the V-groove element. Advantageously the tapering assists in placing and positioning the optical fiber within the V-groove of the V-groove element. The flat element can be tapered at the first side of the flat element and at the second opposite side of the flat element. Once more tapering assists in placing and positioning the fiber within the flat element. Preferably the alignment elements, in this embodiment the V-groove element and the flat element, are such that a portion of the bare end of the optical fiber contacts the alignment elements over three line contacts parallel to the axis of the bare end, when the first bare end is inserted in the device. When a cylinder, like for instance a portion of a bare end of an optical fiber, is pressed against a plane like for instance the plane of the flat element, the resulting contact area is a line parallel to the axis of the cylinder, therefore the term line contact. When, like in the above described embodiment, the portion of the bare end is pressed against a V-groove, two line contacts are formed, one for each edge of the V-groove. It is not necessary that the portion of the optical fiber which is in contact with the alignment element is the same for each alignment element, but preferably there is an overlap so that the alignment elements contact a specific portion of the bare end of the optical fiber over three line contacts, parallel to the axis of the bare end of the optical fiber.

Preferably, for both alignment elements, for instance the V-groove and the flat element, the tapering is designed in such way that when a fiber enters the channel defined by the alignment elements, the channel entrance is large compared to the fiber diameter and becomes narrower deeper inside the channel, up to a section of constant size comparable to the fiber size.

In another embodiment of the invention, three parallel cylindrical rods are provided such that a channel is defined, wherein three line contacts parallel to the axis of the bare end of the optical fiber are formed when the bare end is inserted in the channel, each line contact resulting from contact between a portion of the bare end and one cylindrical rod.

In addition, the alignment device may comprise an elastic element. For instance, a leaf spring may be used, but other resilient elements may be used as well. A leaf spring is a simple type of spring, commonly used for bringing an area under pressure. The leaf spring is preferably attached directly to the flat element. When the leaf spring is used in a pressured state, for instance as a result of closing a housing of the device, the leaf spring urges one aligning element against another one. In one embodiment, a flat element may be urged against a V-groove element. In another embodiment, the leaf spring can urge the V-groove element against the flat element. When a bare end of an optical fiber is inserted into an alignment device wherein a flat element is urged elastically against a fixed V-groove element, the flat element is lifted. The channel formed by the alignment elements is opened by a force exerted by inserting the bare end, and the flat element is in a floating state, and thus able to move, and to guide the bare end into the V-groove. The elastic element can be such that a first alignment element is urged relative to a second alignment element. This can be enabled for instance by applying an elastic element surrounding two alignment elements, for instance by using a U-shaped leaf spring. In other embodiments, an alignment element can be integrated in an elastic element. In some embodiments, at least two alignment elements can be integrated in a U-shaped leaf spring.

In another embodiment, the channel is defined by a V-groove element and two subsequent flat elements. Whereas in the embodiments discussed hereinbefore one common flat element is used as alignment element for e.g. the first and the second optical fiber that are to be aligned, in this embodiment each bare end is aligned by its own flat element. The flat elements can be pressured by two different elastic elements.

Advantageously, when using the above described device for aligning the bare ends of two optical fibers, the ends are only under a low force because of the elastic element and therefore the brittle optical fibers will not easily be damaged. As an additional advantageous result several connections and disconnections are possible. In addition, by using a floating element, the fiber is guided into the groove. This operation of guiding the fiber within the groove using a floating element is accomplished passively, i.e. the alignment is performed by just inserting the optical fiber. In a preferred embodiment of the invention, the alignment device, and the alignment method, thus work on a self-aligning principle. Therefore, even if the alignment is done by an operator, the alignment is highly independent from the skills of the operator doing the alignment and/or connection. Further, the alignment may easily be done automatically, e.g. in an automatic device, since it is self-aligning.

One preferred embodiment of the invention providing a device for aligning the ends of a first and a second optical fiber, for instance used in an adapter or converter connecting two connectors, may operate as follows. The device comprises an index matching material, for instance an index matching gel, contained in the channel formed by the alignment elements of the device, in this embodiment a flat element and a V-groove element. A first connector comprising a first optical fiber is inserted at one side of the device. When inserted the bare fiber end lifts the floating flat element urged against the V-groove element by a leaf spring at a first side of the V-groove and the flat element. The floating flat element then guides the fiber into the V-groove element. A second connector comprising a second optical fiber is inserted at the other side of the device. When inserted, the second bare end lifts the floating element at the other opposite side and the floating flat element guides the second optical fiber end into the V-groove element. The index matching gel improves the optical connection between the open light transmission paths of the first and second optical fibers.

The index matching gel preferably has an index of refraction that closely approximates that of an optical fiber is used to reduce Fresnel reflection at the surface of the bare optical fiber ends. Without the use of an index-matching material, Fresnel reflections will occur at the smooth end faces of a fiber and reduce the efficiency of the optical connection and thus of the entire optical circuit.

One or more sealing elements may be used in embodiments according to the invention. A sealing element preferably includes a self-healing member. Such a sealing element may have the following functions: a sealing function, a cleaning function, and a light-blocking or, in general, a light attenuation function, for eye protection. Which functions a particular embodiment of a sealing element has, is determined by the characteristics of the embodiment, especially by the properties of the material that is used for the self-healing member of the sealing element. Advantageously the sealing element may keep, together with parts of the device, the optical fiber isolated from the outside world, so that the optical fiber is protected from contamination by e.g. dust and dirt, i.e. is sealed. The sealing element may further comprise a self-healing member; when the bare end of the optical fiber pierces the self-healing member of the sealing element, the bare end pushes away the material of the self-healing member. This material encloses the bare end, since it is self-healing, i.e. after retracting the bare end, the space left by the retracted end is closed automatically. Dust, dirt or other contaminants possibly present on the end face of the bare end may then be caught in the self-healing member, thus cleaning the end face of the bare end of the optical fiber.

In another embodiment of the invention, the second optical fiber can be pre-installed in the device, in such a way that it is sealed from the environment from dust, dirt or other contaminants. Further, instead of a second optical fiber any optical device can be pre-installed. For instance a light emitting element such as a LED or a laser or a light receiving element such as a sensor can be pre-installed. The aligning device comprising a pre-installed light emitting or receiving element can be considered as a receptacle, wherein one has to insert an optical fiber. The receptacle further can comprise a sealing element and an index matching material, for instance gel, contained between the sealing element of the receptacle and the pre-installed optical device in the channel defined by at least two alignment elements. A connector comprising an optical fiber can be inserted at the receiving end of the receptacle. When inserted, the optical fiber end of the inserted connector pierces first through the sealing element, if present, of the alignment device and is then aligned as discussed already above, but now to a pre-installed optical device. The alignment of the bare end of the optical fiber to the optical device is accomplished by having the channel, defined by the alignment elements of the device, being aligned with the pre-installed device in a way as known in the art.

In embodiments, the device may further comprise pre-alignment means for pre-aligning an optical fiber. The latter is preferably accomplished by using a conical opening at both sides of the adapter. The conical shape aids guiding the optical fiber ends in the opening of the alignment elements, such as the V-groove and the flat element. The latter guidance is improved by the tapered shape of both alignment elements.

The device described above can preferably have a rectangular or a circular shape. The shape of the adapter will not add to the aligning performance, but depending on design purposes the rectangular or circular shape can be chosen. The circular embodiment does ease the mounting of the device, which because of its circular shape is possible under any angle.

### BRIEF DESCRIPTION OF THE DRAWINGS

Further features of the present invention will become apparent from the drawings, wherein:
FIG. 1 is a perspective of an alignment device embodying the present invention.
FIG. 2 is a perspective of an alignment device with circular symmetry whereby a light emitting or receiving element is pre-installed, embodying the present invention.
FIG. 3 is a perspective of an alignment device whereby the device has a circular symmetry and wherein an alignment element is integrated in the elastic element according to an embodiment of the present invention.
FIG. 4a is a schematic representation of an elastic element according to a preferred embodiment of the present invention.
FIG. 4b is a schematic representation of an elastic element whereby the channel is defined by three cylindrical rods according to an embodiment of the present invention.
Fig. 5a is a schematic representation of another alignment device.
Fig. 5b is a schematic representation of a mating plane of an alignment device comprising one bare fiber end, according to an embodiment of the present invention; the mating plane is the plane where the aligned bare fiber ends make contact.
Fig. 5c is a schematic representation of a mating plane of an alignment device comprising two bare fiber ends, according to an embodiment of the present invention.
Fig. 5d is a schematic representation of a mating plane of an alignment device comprising a flat element that includes a flat two-dimensional surface and a deflecting portion.
FIG. 6 is a schematic representation of an alignment device according to an embodiment of the present invention.
FIG. 7 is a schematic representation of an alignment device whereby a light emitting or receiving element is pre-installed, according to an embodiment of the present invention.

### DETAILED DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features; and, a reference numeral appearing in more than one figure refers to the same element. The drawings and the following detailed descriptions show specific embodiments of an alignment system.

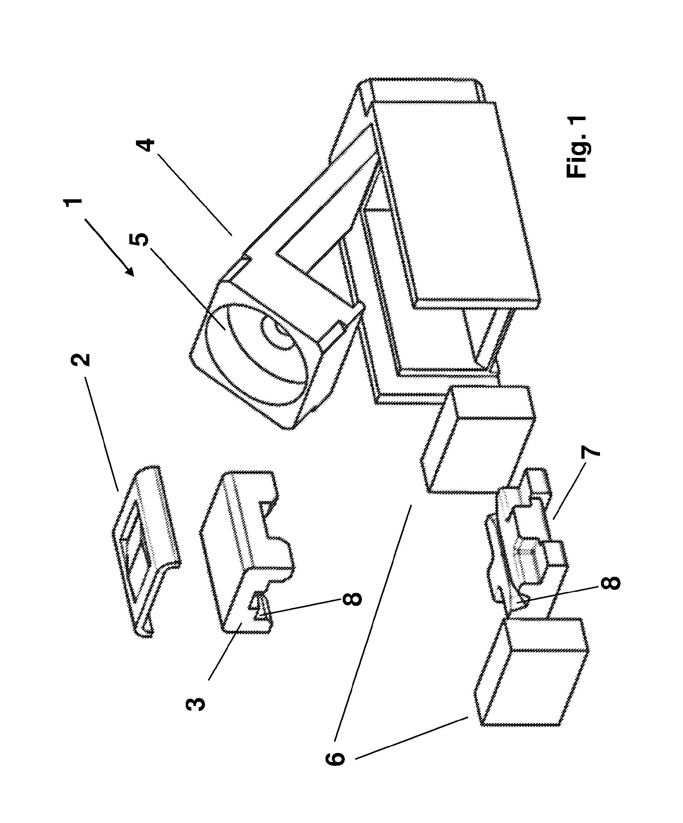

Fig. 1 illustrates an exploded view of an embodiment of an alignment device 1, for connecting two connectors. The alignment device comprises two self-healing members 6, and an index matching gel (not shown) contained between the first and second self-healing member 6 of the device in the channel, defined by the V-groove element 7 and the flat element 3, which is pressed towards the V-groove element 7 by the elastic means 2, once the housing 4 of the device is closed. The flat element 3 is floating, so that the alignment device is self-aligning. The self-healing member 6 may e.g. be a cold-applied, pre-cured silicone gel, e.g. Dow Corning GT-4201. Preferably the self-healing member 6 may have a thickness of 1.5 mm. If GT-4201 is used, it may be pressured such that the thickness is e.g. 1 mm after pressuring. The conical shape 5 of the means for receiving an optical fiber connector is preferably used as a pre-alignment means guiding the optical fiber ends in the opening of the alignment elements, such as the V-groove 7 and the flat element 3. The latter guidance may be ameliorated by the tapered shape 8 of both described alignment elements.

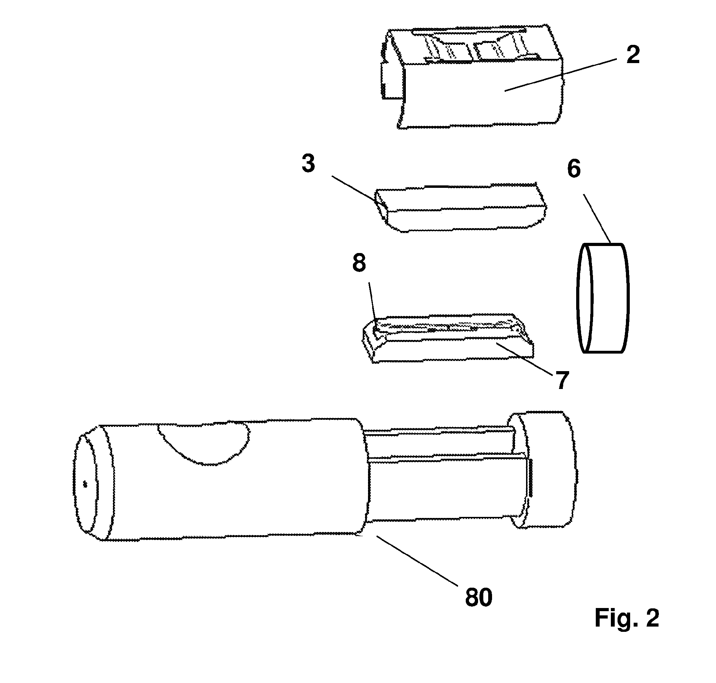

Fig. 2 illustrates exploded view of a circular embodiment of an alignment device 80 for connecting one connector. The device comprises a pre-installed optical element (not shown), one self-healing member 6, and an index matching gel (not shown) contained in the channel, defined by the V-groove element 7 and the flat element 3, between the self-healing member 6 and the pre-installed optical element (not shown).

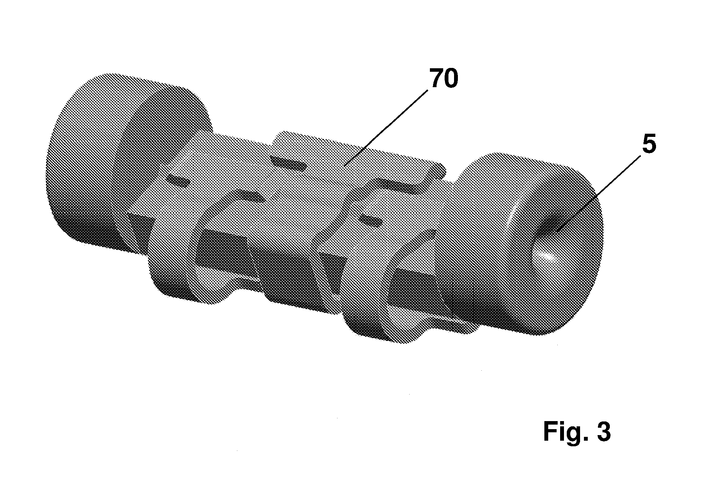

Fig. 3 illustrates a circular embodiment of an alignment device 80 for connecting two connectors. A flat element and a V-groove element are used for aligning, and the flat alignment element is integrated in the elastic element 70. The conical shape 5 used as means for receiving an optical fiber is preferably used as a pre-alignment means guiding the bare end of the optical fiber end in the opening of the alignment elements.

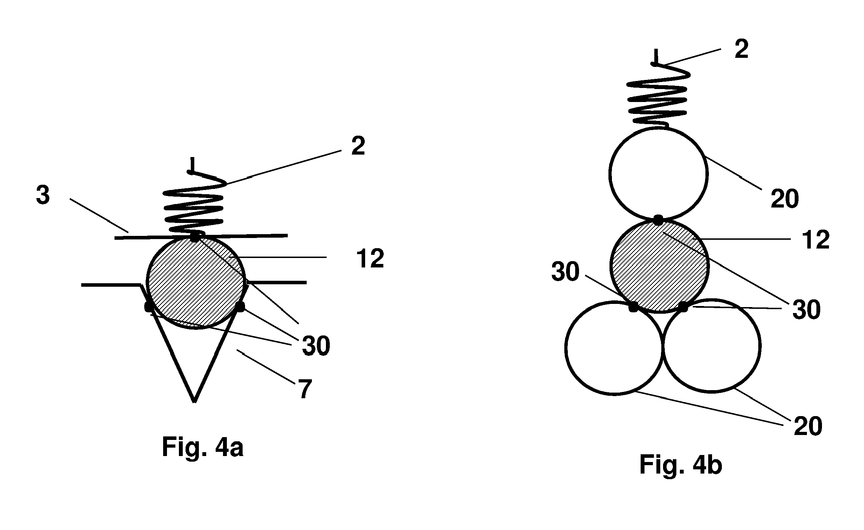

Fig. 4a schematically shows the urging of a flat element 3 towards a V-groove element 7 by elastic element 2. The channel is defined by the flat element 3 and the V-groove element 7 and the urging results in contact of a portion of the bare end 12 of the fiber against the flat element 3; the resulting contact area is a line contact 30 parallel to the axis of the bare end. The bare end 12 is pressed against the V-groove element 7 and two line contacts 30 are formed, one for each edge of the V-groove element 7. As Fig. 4a is a schematic representation in a plane perpendicular to the axis of the bare end 12, the three line contacts 30 are represented as three contact points. Fig. 4b is also the schematic representation of an embodiment in a plane perpendicular to the axis of the bare end 12, wherein the channel of the alignment elements is defined by three cylindrical rods 20.

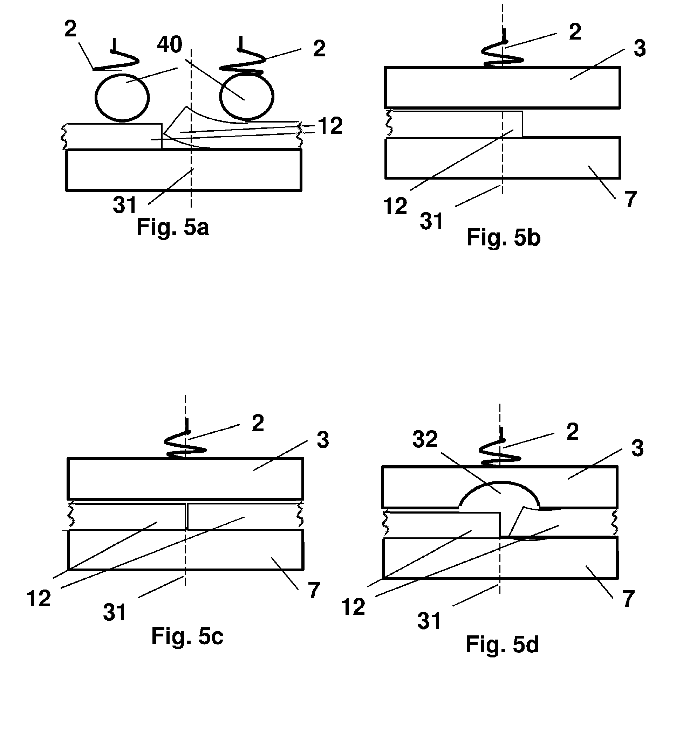

A prior art embodiment for aligning the bare ends 12 of two optical fibers, wherein two spheres 40 are urged by elastic elements 2 towards two cylindrical rods, one sphere for each bare end 12 of an optical fiber, is illustrated schematically in Fig. 5a. Such a system is used in the SUHNER FIBEROPTIC OPTOCLIP II. We have found that, as illustrated in Fig. 5a, an important disadvantage of this device is that the fiber ends 12 deflect heavily near the mating plane 31 where the two bare ends meet, which may result in poor optical connectivity. A preferred embodiment of the invention provides a device for aligning the bare ends 12 of a first and a second optical fiber such that the bare ends 12 do not deflect near the mating plane 31 (Fig. 5b). The flat element 3 provides a third line contact and insures a non-deflecting bare end 12 and as a result a very good and high optical connectivity is obtained.. However the bare ends 12 of both fibers which usually are cleaved and thus are sharp tend to schrive the surface of the V-groove element 7 as a result of the applied pressure. To decrease schriving of the alignment elements, the alignment elements may be manufactured using a silicon-based material, e.g. silicon, or glass, or a coated plastic material. In case silicon is used, the groove may be etched in the silicon. These materials have a good resistance to wear. To overcome the schriving caused by the bare fiber ends 12 but maintaining a good optical connection another embodiment of the present invention can be used. According to this embodiment, illustrated in Fig. 5d, a part of the alignment element can be flat and offers a line contact with only a portion of the bare fiber end 12, and this flat element 3 has an opening 32 near the mating plane 31. The opening 32 can cause deflection of the fiber end 12 but because a portion of the alignment element is flat and offers a line contact, the deflection will not result in an optical connectivity which is too weak as compared to the discussed prior art embodiment. A good compromise between decreasing the schriving of an alignment element and a good optical connectivity can thus be obtained in this embodiment. In a preferred embodiment a flat element 3 without an opening 32 is used, as shown in Fig. 5c, and the alignment element are preferably made from a material having good wear resistance. In the embodiment shown in Fig. 5c, the mating plane 31 can move, while a good contact between the optical fibers is retained. Advantages of such a moving mating plane are that good contact is less dependent on tolerances of the fiber length, that technologies for field installation (as opposed to factory installation) may be used, that single-side pull on the fiber is allowed.

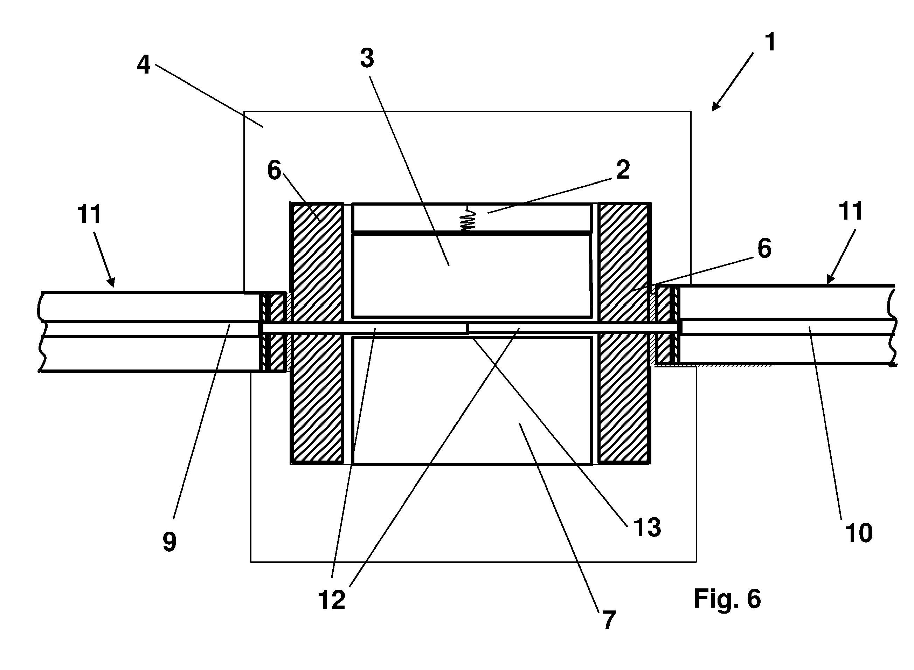

An embodiment of the invention providing a device for aligning the bare ends 12 of a first and a second optical fiber, for instance used in an adapter for connecting two connectors 11, is illustrated schematically in Fig. 6. This adapter 1 comprises two self-healing members 6, and an index matching material 12, for instance an index matching gel, contained between the first and second member 6 of the adapter and in the V-groove alignment element 7. An index matching material 12 which has an index of refraction that closely approximates that of an optical fiber is preferably used. A first connector 11 comprising a first optical fiber 9 is inserted at one side of the adapter. When inserted, the means for receiving the optical fiber connector 11 has a conical shape and is preferably used as pre-alignment means. The first optical fiber end 12 pierces through a first self-healing member 6 of the adapter 1. The bare fiber end 12 then at a first side of the V-groove element 7 and flat element 3 lifts the floating flat element 3 urged against the V-groove 7 element by a leaf spring 2. The floating flat element 3 then guides the fiber into the V-groove element 7. A second connector 11 comprising a second optical fiber 9 is then inserted at the other side of the adapter that preferably also comprises the described pre-alignment means. When inserted, the second optical fiber end 12 pierces a second self-healing member 6 of the adapter 1. The second optical fiber end 12 then lifts the floating element 3 at the other opposite side and the pressed flat element guides the second optical fiber end 12 into the V-groove element 7. The index matching gel 13 between the first and second self-healing members 6 and in the channel of the adapter 1, defined by the V-groove element 7 and the flat element 3, improves the optical connection between the open light transmission paths of the first and second optical fibers.

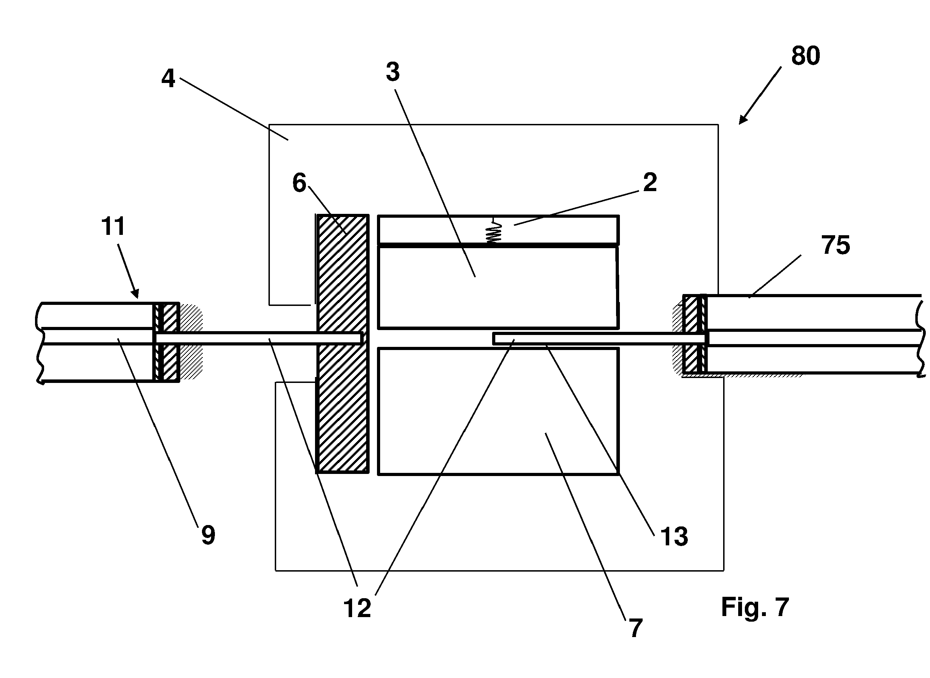

Fig. 7 schematically shows another embodiment of the invention providing a device for aligning used, for instance used in an adapter 80, for connecting one connector 11 to an optical device, wherein the optical device is an optical connector 75 which is pre-installed in the adapter 80. The pre-installed optical connector 75 in the adapter 80 will act as a receptacle for the, to be inserted, optical connector 11. The adapter 80 may thus function as a converter element, for connecting for instance different optical connector types to other. The connector 11, comprising a first optical fiber 9, is inserted at one side of the adapter 80. When inserted, preferably the conical shape of the means for receiving an optical fiber connector 11 is again used as pre-alignment means. The optical fiber end 12 then pierces through the self-healing member 6. The bare fiber end 12 then lifts the floating flat element 3 urged against the V-groove 7 element by a leaf spring 2 at a first side of the V-groove 7 and flat element 3. The floating flat element 3 then guides the fiber into the V-groove element 7. The index matching gel 13 contained between the self-healing member 6 and the pre-installed optical connector 75 in the defined channel of the adapter 80 improves the optical connection between the open light transmission paths of the first optical fiber 9 and the pre-installed optical element 75.

It is to be understood that this invention is not limited to the particular features of the means and/or the process steps of the methods described as such means and methods may vary. It is also to be understood that the terminology used herein is for purposes of describing particular embodiments only, and is not intended to be limiting. It must be noted that, as used in the specification and the appended claims, the singular forms "a" "an" and "the" include singular and/or plural referents unless the context clearly dictates otherwise. It is also to be understood that plural forms include singular and/or plural referents unless the context clearly dictates otherwise. It is moreover to be understood that, in case parameter ranges are given which are delimited by numeric values, the ranges are deemed to include these limitation values.

The invention is defined by the appended claims.

## Claims

1. A device (1) for aligning a first optical fiber (9), the first optical fiber (9) having a first bare end (12), said device comprising:
- at least two alignment elements (3,7) defining a channel having a channel end for receiving the first bare end;
- elastic means (2) adapted for opening said channel, against a force exerted by said elastic means, by a force exerted by insertion of the first bare end into said channel at said channel end;
wherein said at least two alignment elements are adapted for contacting a portion of the first bare end over three line contacts (30), when the first bare end is inserted in said channel.

2. Device according to claim 1 wherein said device is for aligning said first bare end with an optical device.

3. Device according to claim 2 wherein the optical device is a light source such as a LED, or a light detector.

4. Device according to claim 2 wherein the first optical fiber is part of a first optical connector and wherein the optical device is a second optical connector including a second optical fiber (10) having a second bare end (12); wherein said channel further has a second channel end opposite to said channel end and for receiving the second bare end of the second optical fiber; wherein said device further comprises second elastic means (2) adapted for opening said channel at said second channel end, against a force exerted by said second elastic means, by a force exerted by insertion of the second bare end into said channel at said second channel end; and wherein a set of alignment elements out of said at least two alignment elements are adapted for contacting a portion of the second bare end over a set of three line contacts, when said second bare end is inserted in said channel at said second channel end.

5. Device according to claim 4 wherein said second elastic means equals said first elastic means and wherein said set of alignment elements equals said at least two alignment elements.

6. Device according to any one of claims 1 to 5 wherein said at least two alignment elements comprise a V-groove element (7) and a flat element (3) and wherein said flat element is urged by said elastic means towards said V-groove element.

7. Device according to any one of claims 1 to 5 wherein said at least two alignment elements comprise a V-groove element and a flat element and wherein said flat element is integrated in said elastic means (75).

8. Device according to claim 6 or claim 7 wherein said flat element is a floating flat element.

9. Device according to any one of claims 1 to 5 wherein said at least two alignment elements comprise a V-groove element and a flat element and wherein said V-groove element is urged by said elastic means towards said flat element.

10. Device according to any one of the preceding claims further comprising an index matching gel (12) in said channel.

11. Device according to any one of the preceding claims further comprising at least one self-healing member (6).

12. Device according to any one of the preceding claims further comprising means for pre-aligning (5) said first optical fiber.

13. Method for aligning a first bare end (12) of a first optical fiber (9), the method comprising the steps of:
- inserting the first bare end into a first channel end of a channel defined by at least two alignment elements (3,7);
- lifting a first floating alignment element out of said at least two alignment elements by said inserting the first bare end, against an elastic force;
- contacting a portion of the first bare end over three line contacts (30) with said at least two alignment elements.

14. Method according to claim 13 further comprising the steps of:
- inserting a second bare end of a second optical fiber (10) into a second channel end of said channel, opposite to said first channel end;
- lifting a second floating alignment element out of a set of alignment elements out of said at least two alignment elements by said inserting the second bare end, against a second elastic force;
- contacting a portion of the second bare end over a set of three line contacts with said set of alignment elements.

15. Method according to claim 14 wherein said first floating alignment element equals said second floating alignment element and is a floating flat element (3), wherein said set of alignment elements equals said at least two alignment elements and wherein the set of three line contacts equals the three line contacts.
